# DEMANDE DE BREVET EUROPEEN

(11) **EP 1 418 742 A1**
(43) Date de publication de la demande: **12.05.2004**
(21) Numéro de dépôt: 03024782.9
(22) Date de dépôt: 30.10.2003
(51) Int. Cl.: H04M 7/00, H04L 12/24, H04L 29/06

(54) **Procédé et dispositif d'évaluation de la qualité percue d'un signal de parole recu via un réseau de commutation de paquets**

(30) Priorité: 07.11.2002 FR 0213961
(71) Demandeur: FRANCE TELECOM, 75015 Paris (FR)
(72) Inventeur: Le Saout, Jean-Yves, 22660 Trelevern (FR); Losquin, Patrick, 22300 Lannion (FR); Barriac, Vincent, 22660 Trelevern (FR); Camin, Jean-Michel, 33470 Gujan-Mestras (FR)

(57) **Abrégé**

Un procédé d'évaluation de la qualité vocale d'un signal de parole reconstitué dans un terminal de communication à partir de paquets de données reçus (E31) dans le terminal au cours d'une communication vocale établie au travers d'un réseau à commutation de paquets, comporte les étapes de détection (E33) de l'établissement d'une communication vocale ; d'obtention (E35) d'informations d'identification de la communication vocale à partir des paquets de données reçus, et génération de données d'identification de la communication représentatives desdites informations d'identification ; d'obtention (E37) d'informations de qualité réseau à partir des paquets de données reçus, et génération de données de qualité réseau représentatives desdites informations de qualité réseau ; de prélèvement (E39) d'au moins une partie du signal de parole reconstitué, juste avant sa délivrance à une carte son incorporée dans le terminal de communication en vue de sa restitution acoustique ; de traitement (E41) du signal de parole prélevé, en vue d'obtenir des informations sur la qualité vocale réellement perçue par l'utilisateur du terminal au cours de la communication, et génération de données de qualité vocale représentatives desdites informations sur la qualité vocale du signal de parole ; de génération (E43) et mémorisation d'un rapport informatique de qualité vocale, dit "ticket de qualité", rassemblant lesdites données d'identification de la communication, lesdites données de qualité réseau, et lesdites données de qualité vocale.

## Description

La présente invention a trait de manière générale aux réseaux à commutation de paquets, notamment l'Internet, et plus particulièrement à la téléphonie sur IP.

L'invention concerne plus précisément un procédé d'évaluation de la qualité vocale d'un signal de parole reconstitué dans un terminal de communication à partir de paquets de données reçus dans le terminal, au cours d'une communication vocale établie au travers d'un réseau à commutation de paquets. L'invention concerne aussi un dispositif comportant des moyens adaptés à mettre en oeuvre un tel procédé, ainsi qu'un équipement terminal de communication, tel qu'un téléphone IP ou un ordinateur personnel doté d'un logiciel de téléphonie, comportant un tel dispositif.

Les possibilités accrues de joindre et de communiquer avec n'importe quel interlocuteur en un lieu sensiblement quelconque du globe terrestre, à un instant quelconque et pour un coût dérisoire, celui d'une communication locale, par l'intermédiaire du réseau d'interconnexion mondial de l'Internet, ont suscité un engouement pour la téléphonie sur réseau à commutation de paquets, plus particulièrement pour la téléphonie sur IP (*Internet Protocol*).

Contrairement à la téléphonie classique sur réseau fixe par l'intermédiaire du réseau téléphonique commuté, la communication en téléphonie sur réseau à commutation de paquets, en particulier la téléphonie sur IP, présente le plus souvent une qualité médiocre en l'absence de garantie d'un niveau de qualité minimum.

Un tel défaut de garantie de qualité vocale en téléphonie sur IP est inhérent à la conception même du réseau, lequel favorise l'interconnexion des interlocuteurs au détriment de la bande passante finalement allouée au signal de parole, seul un critère de meilleur effort (*best effort*) en matière de bande passante allouée étant admissible.

En particulier, le débit des informations transmises, sous forme de paquets numériques représentatifs du signal de parole, diminue au fur et à mesure que les usagers du réseau IP se connectent et utilisent le réseau en téléphonie sur IP ou non.

Le déploiement dans des conditions satisfaisantes des services de téléphonie sur IP nécessite donc la mise en oeuvre d'un contrôle de la qualité des services proposés et en particulier la mise en oeuvre d'outils de mesure de cette qualité.

Les principaux défauts d'une transmission en téléphonie sur IP, encore désignée par "voix sur IP" (*voice over IP* - VoIP), sont mentionnés ci-après :
- Les retards importants, liés aux délais d'acheminement et aux temps de traitement par les équipements du réseau. Ce défaut peut gêner l'interactivité et donc rendre la conversation entre appelant et appelé difficile, voire impossible.
- La gigue ((*jitter* en anglais) dans la durée d'acheminement des paquets, c'est-à-dire la variance statistique du délai de transmission. Ce phénomène se traduit par des intervalles de temps de longueur variable entre les instants d'arrivée des paquets.
- Les pertes de paquets, provoquées soit parce que ces paquets ont été éliminés lors de l'acheminement, leur durée de vie étant épuisée, suite à l'encombrement des routeurs, soit parce qu'ils sont arrivés au terminal distant avec un retard trop important, ces paquets étant alors détruits à l'arrivée.
- L'écho lié principalement aux retards élevés et extrêmement variables.
- La distorsion due au codage du signal de parole en paquets numériques à débit réduit, généralement utilisé en VoIP.

Les défauts précités ont un impact réel sur la qualité du signal perçu par l'utilisateur du terminal de téléphonie, et il apparaît très important d'estimer cette qualité, tant au niveau objectif, par mesure des paramètres physiques et acoustiques de ce signal, que subjectif, par exemple à partir de tests d'écoutes permettant d'identifier ce qui est effectivement perçu par les utilisateurs.

Parmi les outils actuels permettant d'évaluer la qualité de transmission du signal de parole transmis dans un réseau de communication, on peut essentiellement distinguer deux catégories :
- les dispositifs de type sonde fonctionnant par connexion au réseau de transmission et de manière autonome par rapport aux terminaux utilisateurs ;
- les dispositifs de type base de données MIB (*Management Information Base*) implantés dans certains équipements du réseau tels que les routeurs ou les passerelles.

Les dispositifs de type sonde peuvent être des outils de mesure de bout en bout, injectant un corpus de parole à une extrémité du réseau et enregistrant le corpus reçu à l'autre extrémité. Le signal reçu est alors analysé et comparé au signal envoyé selon des modèles psycho-acoustiques, et un niveau de qualité est déterminé. Parmi ce type de sonde, on peut citer le système connu sous le nom Omni-Q commercialisé par la société Radcom.

L'inconvénient de ce type de dispositif, est qu'il est intrusif, c'est-à-dire qu'il se substitue au terminal utilisateur et ne peut donc évaluer la qualité vocale perçue par l'utilisateur lors d'une communication réelle.

D'autres dispositifs de type sonde sont non-intrusifs car ils fonctionnent par connexion en un point quelconque du réseau. Cependant, ils fonctionnent uniquement au niveau protocolaire et fournissent seulement des statistiques sur les protocoles de communication mis en oeuvre sur le réseau, sur les retards, la gigue, le taux de paquets perdus, etc. Parmi les dispositifs de ce type, on peut citer le système connu sous le nom VQmon, commercialisé par la société Telchemy.

En ce qui concerne les dispositifs de type MIB, ceux-ci sont généralement implantés dans un équipement du réseau (routeur, passerelle...) et ont pour fonction d'archiver le paramétrage de l'équipement, les principales actions liées au fonctionnement de l'équipement, les interventions éventuelles comme les mises à jour logicielles, ainsi que des informations sur le trafic des paquets (débit, gigue, perte de paquets...). Toutes ces informations sont horodatées et leur extraction puis leur examen, permet donc d'avoir une vision du fonctionnement du réseau au niveau de l'équipement considéré, c'est-à-dire au niveau d'un noeud particulier du réseau. Parmi les dispositifs de type MIB connus, on peut citer par exemple le système SAA (*Service Assurance Agent*) commercialisé par la société Cisco.

Si l'intérêt des dispositifs MIB réside dans l'obtention d'informations au coeur même des équipements du réseau, ces informations ne sont cependant qu'indirectement indicatives de la qualité du signal de parole perçu par un utilisateur au travers de son poste.

De leur côté, les dispositifs de type sonde permettent d'accéder plus facilement à l'évaluation de la qualité vocale du signal de parole perçu par l'utilisateur. Cependant cette évaluation ne prend pas en compte l'influence du terminal utilisateur : gestion de la mémoire tampon de gigue (*jitter buffer*), réglages de la restitution sonore, etc.

Par conséquent, compte tenu du développement croissant de la téléphonie sur IP, il y a un réel besoin de disposer d'outils permettant d'évaluer la qualité vocale effectivement perçue par l'utilisateur d'un équipement de téléphonie de type "voix sur IP", au cours de communications téléphoniques réelles.

La présente invention a pour objectif de répondre à ce besoin. A cet effet, l'invention concerne, selon un premier aspect, un procédé d'évaluation de la qualité vocale d'un signal de parole reconstitué dans un terminal de communication à partir de paquets de données reçus dans le terminal au cours d'une communication vocale établie au travers d'un réseau à commutation de paquets. Conformément à l'invention, ce procédé est remarquable en ce qu'il comporte les étapes suivantes :
(A) - détection de l'établissement d'une communication vocale ;
(B) - obtention d'informations d'identification de la communication vocale à partir des paquets de données reçus, et génération de données d'identification de la communication représentatives des informations d'identification ;
(C) - obtention d'informations de qualité réseau à partir des paquets de données reçus, et génération de données de qualité réseau représentatives des informations de qualité réseau ;
(D) - prélèvement d'au moins une partie du signal de parole reconstitué, juste avant sa délivrance à une carte son incorporée dans le terminal de communication en vue de sa restitution acoustique ;
(E) - traitement du signal de parole prélevé, en vue d'obtenir des informations sur la qualité vocale réellement perçue par l'utilisateur du terminal au cours de la communication, et génération de données de qualité vocale représentatives des informations sur la qualité vocale du signal de parole ;
(F) - génération et mémorisation d'un rapport informatique de qualité vocale, dit "ticket de qualité", rassemblant les données d'identification de la communication, les données de qualité réseau, et les données de qualité vocale.

Grâce au procédé défini ci-dessus, au cours de chaque communication téléphonique établie dans le terminal de communication considéré, des informations de différentes natures relatives à la qualité de la communication sont générées automatiquement, en temps réel, et rassemblées finalement dans un rapport informatique (ticket de qualité), par exemple sous la forme d'un fichier informatique. Avantageusement, les informations de qualité obtenues concernent à la fois la qualité de transmission des paquets sur le réseau au moment de la communication considérée, et des informations sur la qualité vocale réellement perçue par l'utilisateur puisque, notamment, le signal de parole analysé est le signal devant être restitué dans le haut-parleur du terminal.

Les tickets de qualité obtenus, pourront ensuite servir de base pour l'analyse de la qualité des communications vocales établies sur le réseau en interprétant, par exemple, les informations obtenues sur la qualité vocale perçue par l'utilisateur, à la lumière des informations obtenues sur la qualité du réseau durant ces communications.

Selon une caractéristique particulière de l'invention, le procédé défini ci-dessus comporte en outre une étape (G) de transmission du ticket de qualité à un serveur de collecte relié au réseau. Le serveur de collecte assure alors un traitement des tickets de qualité envoyés par un ensemble de terminaux de communication reliés au réseau, afin d'évaluer la qualité des signaux de parole reçus dans l'ensemble de terminaux.

De cette façon, les informations de qualité vocale obtenues dans l'ensemble considéré de terminaux, peuvent être remontées périodiquement et centralisées au niveau d'un serveur, offrant à l'opérateur de téléphonie la possibilité d'assurer une supervision continue et précise du service offert.

Selon une autre caractéristique particulière du procédé objet de l'invention, l'étape (D) de prélèvement d'au moins une partie du signal de parole reconstitué, consiste à prélever, de manière aléatoire pendant la communication, des échantillons de durée prédéterminée du signal de parole. Par ailleurs, l'étape (E) de traitement du signal de parole prélevé, en vue d'obtenir des informations sur la qualité vocale réellement perçue par l'utilisateur du terminal au cours de la communication, est mise en oeuvre par un module de détection non intrusive des défauts du signal de parole, le module de détection comportant des moyens de détection de défauts objectifs et subjectifs présents dans le signal de parole.

En utilisant un tel type de module de détection de défauts, appliqué au signal de parole prélevé avant sa restitution acoustique, on obtient des informations sur la qualité vocale réellement perçue par l'utilisateur.

Selon un mode particulier de réalisation, les paquets de données reçus dans le terminal subissent un traitement préalable de désencapsulation protocolaire selon un ensemble prédéfini de protocoles de communication, ce traitement permettant d'obtenir des messages de signalisation d'appel, des messages de négociation d'appel, un flux de paquets de données audio, et un flux de paquets de données de contrôle de communication. Dans ce mode de réalisation, l'établissement d'une communication vocale est détecté, à l'étape (A), lors de la réception d'un message de signalisation d'appel prédéterminé caractéristique de l'établissement d'une connexion selon un protocole de signalisation d'appel prédéterminé. D'autre part, les informations d'identification de la communication vocale sont obtenues, à l'étape (B), à partir des messages de négociation d'appel. Enfin, les informations de qualité réseau sont obtenues, à l'étape (C), à partir des paquets de contrôle de communication.

En pratique, le réseau à commutation de paquets est un réseau à commutation de paquets basé sur le protocole IP, les paquets de données reçus dans le terminal étant des paquets IP.

Selon un mode particulier de réalisation, dans le cadre d'un réseau IP, on utilise de manière non limitative l'ensemble des protocoles de communication définis selon la recommandation ITU-T H.323.

En variante, on peut aussi utiliser, de manière non limitative, l'ensemble de protocoles de communication définis selon le standard IETF SIP.

Selon un second aspect, l'invention concerne un dispositif d'évaluation de la qualité vocale d'un signal de parole reconstitué dans un terminal de communication, ce dispositif comportant des moyens informatiques matériels et/ou logiciels adaptés à la mise en oeuvre d'un procédé d'évaluation d'un signal de parole, tel que succinctement exposé supra.

L'invention concerne encore un programmé d'ordinateur sur un support d'informations, ce programme comportant des instructions de programme adaptées à la mise en oeuvre d'un procédé d'évaluation de la qualité vocale d'un signal de parole selon l'invention, lorsque ce programme est chargé et exécuté dans un ordinateur.

Les avantages de ce dispositif informatique et de ce programme d'ordinateur, sont identiques à ceux du procédé d'évaluation de la qualité vocale, tels que brièvement exposés supra.

D'autres particularités et avantages de l'invention apparaîtront encore dans la description ci-après de modes préférés de réalisation, décrits à l'appui des dessins annexés, sur lesquels :
- la FIG. 1 est une représentation schématique d'un réseau à commutation de paquets dans lequel on peut mettre en oeuvre l'invention ;
- la FIG. 2 est un diagramme schématique d'un dispositif d'évaluation de la qualité vocale d'un signal de parole selon l'invention ;
- la FIG. 3 est un organigramme illustrant un procédé d'évaluation de la qualité vocale d'un signal de parole selon l'invention ; et
- la FIG. 4 représente un exemple de fenêtre d'affichage graphique sur un écran d'ordinateur, permettant de visualiser les informations de qualité vocale relatives à un ensemble de terminaux de communication vocale connectés au réseau.

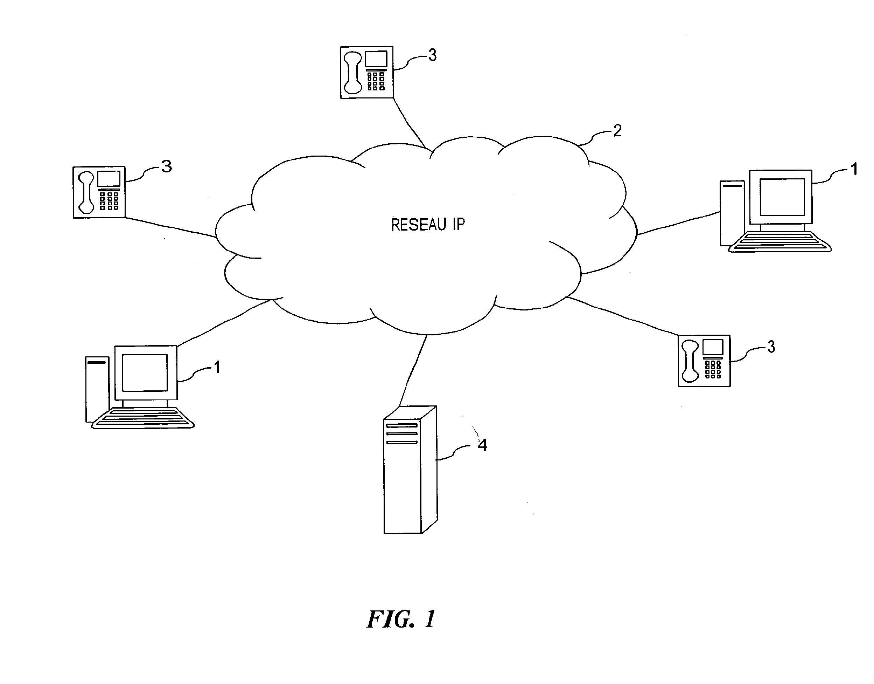

La FIG. 1 représente un réseau à commutation de paquets 2 fonctionnant selon une pile de protocoles basée sur le protocole IP (*Internet Protocol*), couramment désigné par "réseau IP". L'invention s'applique cependant à tout réseau de commutation de paquets basé sur un protocole de type IP.

Au réseau 2 sont reliés des équipements d'extrémité IP : 1, 3, 4, parmi lesquels, certains sont aptes à établir des communications vocales sur IP (VoIP) et sont communément désignés par "terminaux IP", tels que des téléphones IP 3, ou des ordinateurs personnels multimédias (PC) 1 équipés d'un logiciel de téléphonie adapté, tandis que d'autres équipements, comme le serveur 4 sont destinés à fournir sur le réseau des services particuliers.

De manière à simplifier l'exposé de l'invention, on a représenté à la FIG. 1 un seul réseau (2), cependant le réseau 2 peut englober un certain nombre de sous-réseaux associés à des équipements de type passerelle et/ou routeurs permettant d'interconnecter ces sous-réseaux et de rendre possible ainsi une communication IP de bout en bout entre les terminaux IP.

Parmi ces sous-réseaux, on peut trouver typiquement un réseau commuté (RTC), ainsi que des réseaux locaux (par ex. Ethernet).

Selon un mode de réalisation préféré, les terminaux IP 1, 3 communiquent entre eux en utilisant l'ensemble des protocoles de communication définis selon la recommandation H.323 de l'ITU-T (*International Telecommunications Union*). Pour obtenir plus d'informations sur cet ensemble de protocoles, on pourra consulter le site Web suivant : *www.itu.org.*

Selon un autre mode de réalisation, les terminaux IP 1, 3 communiquent entre eux en utilisant l'architecture de protocoles SIP (*Session Initiation Protocol*) proposée par l'IETF (*Internet Engineering Task Force*). On pourra obtenir plus d'informations sur cette architecture en consultant le site Web : *www.ietf.org.*

Bien entendu, l'invention n'est nullement limitée à ces deux familles de protocoles, mais s'applique au contraire à toute architecture protocolaire supportant la voix sur IP.

Le serveur 4 est ici un serveur de collecte chargé de récupérer, conformément à l'invention, les informations de qualité relative aux communications vocales établies dans les terminaux IP (1, 3).

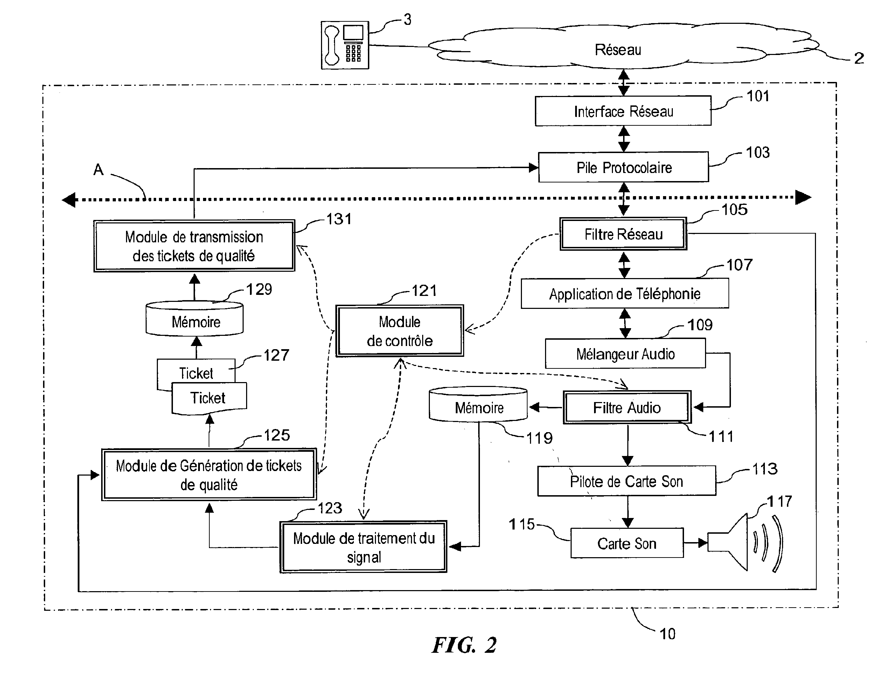

Chaque terminal IP 1, 3, est équipé à cet effet d'un dispositif selon l'invention permettant d'évaluer la qualité vocale d'un signal de parole reconstitué dans le terminal à partir des paquets de données IP reçus au cours d'une communication. Ce dispositif est représenté à la FIG. 2.

En liaison avec la **FIG. 2,** on va à présent décrire plus en détail le dispositif d'évaluation de la qualité d'un signal de parole, selon l'invention.

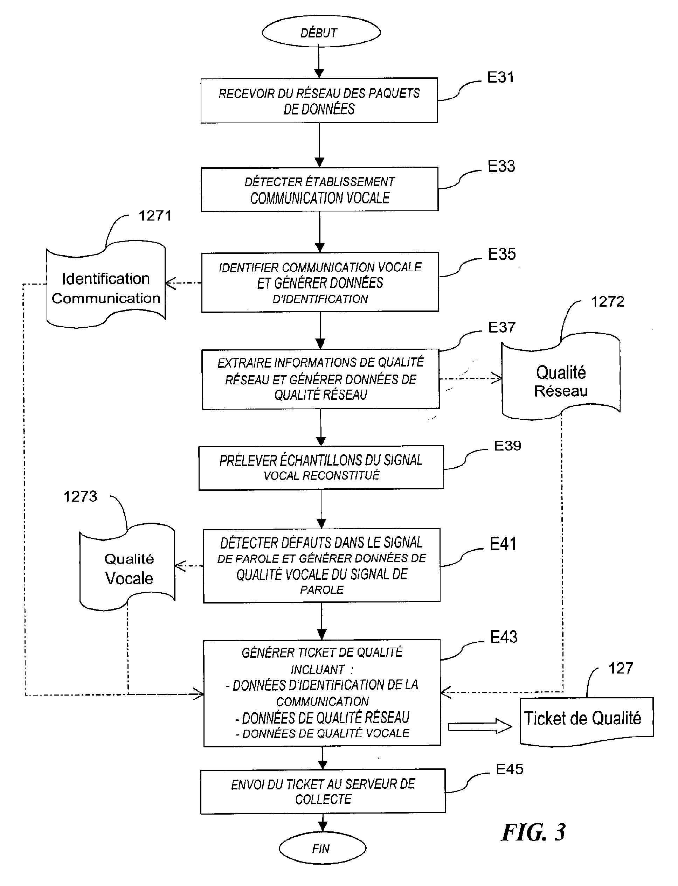

En fonctionnement, le dispositif décrit en relation avec la FIG. 2 permet de mettre en oeuvre le procédé illustré à la **FIG. 3,** les étapes duquel sont décrites ci-après en relation avec les différents éléments composant le dispositif représenté à la FIG. 2.

Le dispositif 10 est incorporé dans un terminal IP. Dans cet exemple d'implémentation, le terminal IP considéré est un ordinateur personnel (PC, 1) de type multimédia.

Le dispositif 10 comporte un ensemble de modules 101-131 essentiellement de nature logicielle. Parmi ces modules, un certain nombre est incorporé de manière classique dans le terminal 1, il s'agit des modules suivants :
- une interface réseau 101 ;
- un gestionnaire de protocoles 103, désignée aussi par "pile protocolaire" ;
- une application de téléphonie 107 ;
- un mélangeur audio 109 ;
- un pilote de carte son 113 ;
- une carte son 115 ;
- au moins un haut-parleur 117 ;
- des moyens mémoire 119, 129 ;
- une interface de programmation A de type API *(Application Programming Interface*).

Les autres modules, spécifiques à la présente invention, sont les suivants :
- un module 105 de filtrage réseau ;
- un module 111 de filtrage audio ;
- un module 121 de contrôle ;
- un module 123 de traitement du signal de parole ;
- un module 125 de génération de tickets de qualité ;
- un module 131 de transmission des tickets de qualité.

L'interface réseau 101 inclut traditionnellement une carte réseau et les éléments nécessaires pour permettre au terminal 1 considéré de se connecter au réseau 2 et de recevoir les signaux électriques acheminant les informations codées. Ces éléments incluent en particulier un modem (modulateur/démodulateur). L'interface réseau délivre en sortie un flux de paquets IP contenant notamment des trames de voix numérisée.

Grâce à cette interface réseau, le dispositif 10 est apte à mettre en oeuvre l'étape E31 (FIG. 3), de réception de paquets de données, en provenance du réseau.

Les paquets IP sont ensuite pris en charge par le gestionnaire de protocoles 103. Ils subissent alors un traitement de désencapsulation protocolaire selon l'ensemble de protocoles de communication (pile de protocoles) utilisé au-dessus du protocole IP.

Typiquement, ce processus de désencapsulation protocolaire permet d'obtenir :
- des messages de signalisation d'appel,
- des messages de négociation d'appel,
- un flux de paquets de données audio, et
- un flux de paquets de données de contrôle de communication.

Dans un mode de réalisation préféré dans lequel on utilise l'ensemble de protocoles H.323, les messages de signalisation d'appel sont des messages selon le protocole de signalisation d'appel H.225.0, les messages de négociation d'appel sont des messages selon le protocole de négociation H.245, le flux de paquets audio est constitué d'un flux de paquets selon le protocole RTP (*Real Time Protocol*) contenant des trames de signal audio numérisé, et le flux de paquets de données de contrôle de communication est constitué d'un flux de paquets selon le protocole de contrôle RTCP (*Real Time Control Protocol*)*.* Les deux protocoles, RTP et RTCP, sont eux-mêmes placés au dessus de protocole UDP (*User Datagram Protocol*).

Dans un autre mode préféré de réalisation dans lequel on utilise l'ensemble de protocoles de l'architecture SIP (*Session Initiation Protocol*), les messages de signalisation d'appel et les messages de négociation d'appel sont contenus dans des messages selon le protocole SIP, le flux de paquets audio est constitué d'un flux de paquets selon le protocole RTP contenant des trames de signal audio numérisé, et le flux de paquets de données de contrôle de communication est constitué d'un flux de paquets selon le protocole RTCP.

Selon une implémentation particulière, le système d'exploitation du PC (1) est Windows^{TM} commercialisé par la société Microsoft, et le gestionnaire de protocoles 103 est constitué de la bibliothèque de fonctions Winsock. L'ensemble de fonctions standardisées fournies par la bibliothèque Winsock permet ainsi de faire tourner sous Windows des applications qui fonctionnent avec les protocole TCP/UDP-IP, indépendamment du matériel utilisé.

En sortie de la pile protocolaire 103, les différents flux de messages et de paquets de données, c'est-à-dire, les messages de signalisation d'appel, les messages de négociation d'appel, le flux de paquets de données audio, et le flux de paquets de données de contrôle de communication, sont fournis au module de filtrage réseau 105.

L'interface de type API (référencée par A à la FIG. 2, est fournie par le système d'exploitation du terminal 1, et permet aux applications informatiques conçues pour accéder au réseau, d'y accéder via le gestionnaire de protocoles 103, en utilisant une bibliothèque de fonctions ou primitives standardisées. Ces primitives permettent ainsi aux applications d'accéder aux protocoles de communication implantés dans le terminal, et de recevoir et envoyer des données.

En prenant le cas d'une implémentation selon les protocoles H.323, on obtient en sortie du gestionnaire de protocoles 103 les flux de données suivants :
- un flux de messages de signalisation d'appel selon le protocole H.225.0 ;
- un flux de messages de négociation d'appel selon le protocole de négociation H.245 ;
- un flux de paquets de données selon le protocole UDP (ou selon le protocole TCP s'il ne s'agit pas d'une communication vocale), les paquets UDP incluant des paquets de données audio selon le protocole RTP et des paquets de données de contrôle de communication selon le protocole RTCP.

Ces flux d'informations sont traditionnellement délivrés en entrée à l'application de téléphonie 107. Dans le cadre du mode de réalisation décrit ici, l'application de téléphonie utilisée est le logiciel NetMeeting^{TM} commercialisé par la société Microsoft.

Conformément à la présente invention, le dispositif 10 comporte un module 105 de filtrage réseau, intercalé entre le module de gestion protocolaire 103 et le module de téléphonie 107.

Le module 105 est transparent vis-à-vis des flux de données sortant du gestionnaire de protocoles (il ne les modifie pas). Il comporte des moyens logiciels, c'est-à-dire des fonctions programmées particulières, pour détecter l'établissement d'une communication vocale, identifier la communication et générer des données d'identification de la communication.

A la FIG. 2, une communication vocale est établie entre le téléphone IP 3 et le dispositif 10 du PC 1.

En pratique, l'établissement d'une communication vocale est détecté (étape E33) par le filtre réseau 105, lors de la réception d'un message de signalisation d'appel prédéterminé caractéristique de l'établissement d'une connexion selon le protocole de signalisation d'appel utilisé.

Ainsi, si le protocole de signalisation d'appel utilisé est le protocole H.225.0, le message de signalisation utilisé est le message 'CONNECT'. Dans le cas, du protocole SIP, on utilise le message de signalisation 'INVITE ACCEPT'.

D'autre part, de manière pratique, le filtre réseau 105 identifie (étape E35) une communication vocale entrante par l'extraction d'informations contenues dans les messages de négociation d'appel reçus. Comme mentionné précédemment, dans le cadre du standard H.323, ces messages de négociation d'appel sont des messages selon le protocole H.245.

Selon le mode de réalisation décrit, les informations d'identification de la communication vocale obtenues à partir des messages de négociation d'appel, incluent notamment les dates de début et de fin de communication, le codec (codeur-décodeur audio), par ex. codeur G.711, négocié entre le terminal appelant et le terminal (1) appelé, les identifiants, par exemple les adresses IP, des terminaux appelant et appelé, et le chemin reliant les deux terminaux au travers du réseau.

Ensuite, le filtre réseau génère (étape E35) des données d'identification de la communication vocale. En pratique, les données d'identification générées, sont constituées d'un document électronique (1271), par exemple un fichier informatique, qui contient sous forme textuelle les diverses informations d'identification de la communication vocale obtenues.

Le filtre réseau 105 comprend également des moyens pour extraire (étape E37), à partir des paquets reçus du gestionnaire de protocoles 103, des informations relatives à la qualité de service offerte par le réseau durant la communication. Les informations de qualité sont obtenues à partir des paquets de contrôle de communication, c'est-à-dire, dans le cas des protocoles H.323 ou SIP, les paquets RTCP.

Selon un mode de réalisation préféré, les informations de qualité réseau obtenues à partir des paquets de contrôle de communication, incluent des informations statistiques sur la communication, en termes de perte de paquets, de gigue d'inter arrivée (*jitter*) des paquets, et des informations sur la qualité de service (QoS) du réseau.

En conséquence, le filtre réseau 105, génère alors (étape E37) des données de qualité réseau représentatives des informations de qualité extraites préalablement. Selon un mode de réalisation préféré, les données de qualité réseau générées sont constituées d'un second document électronique (1272) contenant sous forme textuelle les diverses informations de qualité réseau obtenues. En pratique, il s'agit également d'un fichier informatique.

Les deux fichiers informatiques sont sauvegardés dans une mémoire incorporée dans le terminal. Cette mémoire peut être constituée, par exemple, par une portion de l'espace mémoire d'un disque dur, ou bien par une zone particulière d'une mémoire vive (RAM) dont le contenu est sauvegardé dans une mémoire non volatile (par ex. un disque dur) lorsque le terminal n'est plus alimenté électriquement.

Selon un exemple de réalisation, le filtre réseau 105 est implémenté sous la forme d'une bibliothèque de liens dynamiques (DLL - *data link library*). Cette DLL est chargée automatiquement lors de l'appel de l'interface API de Winsock par une application.

Cette bibliothèque communique avec le gestionnaire de protocoles Winsock par l'intermédiaire d'interfaces particulières, fournies par Winsock : l'interface API et une autre interface connue sous l'acronyme SPI. L'interface SPI (*Service Provider Interface*) permet d'implémenter chacune des différentes fonctions composant le filtre réseau sous la forme d'une LSP (*Layered Service Provider*).

Une instanciation du filtre réseau est créée lorsqu'une application, par exemple l'application de téléphonie (107), demande la création d'un canal de communication réseau (*socket*). Plus précisément, l'instanciation d'un filtre réseau est faite lors de l'appel des fonctions 'WSPSocket' et 'WSPAccept' de l'interface API de Winsock par l'application de téléphonie.

L'appel spécifique de fonctions particulières du filtre réseau, par exemple, pour l'identification de la connexion, l'extraction des paramètres de qualité réseau etc., s'effectue par la surveillance de ports particuliers, notamment au travers des fonctions 'WSPBind' et 'WSPConnect' de Winsock, ou par l'analyse des données échangées sur ces ports.

Par conséquent, le filtre réseau selon l'invention se compose d'un filtre générique qui se décline en filtres spécifiques ou protocolaires en fonction de la nature des données échangées sur les ports, TCP ou UDP, du gestionnaire de protocoles.

La destruction de l'ensemble des filtres (générique et protocolaires) créés pour l'application de téléphonie est effectif lors de l'appel de la fonction 'WSPCloseSocket' de l'API Winsock, c'est-à-dire lorsque l'application de téléphonie demande la fermeture d'un canal de communication (*socket*).

Le filtre réseau selon l'invention est conçu de manière à être compatible avec une pluralité de protocoles de communication. A cet effet, comme mentionné précédemment, il est conçu comme un filtre générique qui se décline en filtres spécifiques (protocolaires). Ces filtres spécifiques sont adaptés à traiter les données transmises selon des protocoles différents de même niveau ou bien selon les protocoles d'une famille particulière de protocoles (SIP, H.323). Ainsi, par exemple, le filtre générique pourra générer, selon le besoin, un filtre de signalisation adapté spécifiquement à la signalisation H.323 ou bien à la signalisation SIP.

De retour à la FIG. 2, le filtre réseau 105 délivre les données qu'il a générées (données d'identification de la communication, données de qualité réseau) au module 125 de génération de tickets de qualité. Par ailleurs, le filtre réseau 105 informe le module de contrôle 121 de l'état du processus de filtrage.

Le module de contrôle 121 est chargé d'assurer le bon déroulement des étapes du procédé selon l'invention, et gère l'interopérabilité entre les différents modules constituant le dispositif de l'invention.

Les flux de données qui sortent du gestionnaire de protocoles 103 (Winsock) sont fournis au travers du filtre réseau 105 qui ne modifie pas ces données, à l'application de téléphonie (NetMeeting). En parallèle, le module de contrôle 121 active le filtre audio 111 qui récupère alors le flux de données audio en sortie du mélangeur audio 109.

Le module d'application de téléphonie 107 extrait du flux de paquets UDP qu'il reçoit, les paquets selon le protocole RTP et en extrait les trames de signal audio numérisé et encodé. Le module de téléphonie 107 reconstitue alors le signal audio, effectue sur celui-ci certains traitements (de la gigue, d'écho, etc.) et délivre en sortie un signal audio reconstitué, typiquement sous forme d'échantillons au format PCM (*Pulse Code Modulation*).

Les échantillons de voix codée PCM sont alors délivrés au mélangeur audio 109 qui applique sur le signal de parole des réglages prédéfinis en vue de sa restitution acoustique, de telle sorte que le signal de parole sortant du mélangeur audio est le signal audio final qui sera traduit de façon sonore, et donc entendu par l'utilisateur du terminal de communication.

Conformément à l'invention, le dispositif 10 d'évaluation de la qualité comporte un module de filtrage audio 109. Le filtre audio 109 est activé (ou désactivé) par le module de contrôle 121 en réponse à une instruction spécifique reçue du filtre réseau 105.

De même que le filtre réseau, le filtre audio 109 ne modifie pas le signal audio qu'il reçoit, il prélève, c'est-à-dire recopie, seulement une partie au moins du signal de parole reconstitué (flux d'échantillons PCM), juste avant sa délivrance à la carte son 115 via le pilote de carte son 113.

Selon un mode de réalisation préféré, le filtre audio 109 prélève de manière aléatoire pendant la communication, des échantillons de durée prédéterminée du signal de parole.

Cette étape du procédé selon l'invention exécutée par le filtre audio, est illustrée à la FIG. 3 sous la référence E39.

En pratique, pour l'implémentation du filtre audio 111, on utilise l'architecture connue sous le nom "Windows Driver Model" (WDM). Cette architecture permet de réaliser un interfaçage avec des pilotes de périphérique (*device driver*) appartenant à une même classe, représentative d'un même type de périphérique. On peut alors filtrer des données à destination d'un périphérique particulier de cette classe. En utilisant cette architecture, le filtre audio est implémenté par l'installation d'un pilote de périphérique, de classe MEDIA, qui est automatiquement chargé lors du démarrage du système d'exploitation Windows.

La capture des données audio par le filtre audio est déclenchée lors de la réception par celui-ci d'un ordre "Start" en provenance du module de contrôle 121, et est inversement arrêtée lors de la réception d'un ordre "Stop". L'envoi de ces ordres est déclenché par la réception, dans le module de contrôle 121, d'instructions spécifiques envoyées par le filtre réseau 105.

Bien sûr, tout au long de la communication vocale, le signal audio est fourni par le filtre audio, sans être modifié, au pilote de carte son 113. Ce dernier le transmet à son tour à la carte son 115 où il subit une conversion numérique analogique, avant d'être restitué de manière acoustique par le haut-parleur 117.

Le système d'exploitation communique avec le filtre audio, notamment par l'intermédiaire de paquets de requête d'interruption (en anglais *Interrupt Request Paquet -* IRP). Le filtre audio reçoit ainsi les ordres "Start" et "Stop" au travers d'IRPs.

Pendant toute la durée de la communication vocale, tout ou partie du flux audio (échantillons PCM) est stocké en mémoire 119 (RAM ou disque dur). Lorsque le filtre audio reçoit l'ordre "Stop", il interrompt l'extraction du flux audio, et l'analyse du signal de parole par le module 123 de traitement du signal, est déclenchée par une instruction de commande envoyée à celui-ci par le module de contrôle 121.

Selon l'invention, le module de traitement 123 du signal de parole est apte à obtenir, à partir du signal de parole prélevé et stocké dans la mémoire 119, des informations sur la qualité vocale réellement perçue par l'utilisateur du terminal au cours de la communication vocale, et à générer en conséquence des données représentatives de ces informations.

Dans ce but, le module de traitement 123 comprend un module de détection non intrusive des défauts du signal de parole. Le module de détection utilisé dans le cadre de l'invention est apte à détecter dans le signal de parole, des défauts de nature objective (c'est-à-dire, par mesure de paramètres physiques) ainsi que des défauts de nature subjective (par ex., à partir de tests d'écoute permettant d'identifier ce qui est effectivement perçu par un utilisateur humain). L'étape correspondante du procédé selon l'invention est représentée à la FIG. 3, sous la référence E41.

Selon un mode préféré de réalisation de l'invention, le module de détection des défauts du signal de parole utilisé dans le cadre de la présente invention, est un système de détection de défauts tel que décrit dans le document demande de brevet français n° 2 817 096, intitulée "Procédé et système de détection non intrusive des défauts d'un signal de parole transmis en téléphonie sur réseau de transmission par paquets".

A ce titre, le module 123 de traitement du signal de parole comprend un module de base de données comportant une bibliothèque de signaux de défauts objectifs, liés aux caractéristiques physiques du signal de parole, et de signaux de défauts subjectifs, liés au typage de la gêne occasionnée à des utilisateurs par lesdits signaux de défauts objectifs. Cette bibliothèque est construite à partir d'une analyse statistique du type de dégradation ou de défaut présent dans le signal de parole. Le module 123 de, traitement du signal comprend en outre des moyens de détection de défauts objectifs présents sur le signal de parole (stocké dans la mémoire 119).

Le module 123 comprend aussi des moyens de calcul et de comparaison des défauts objectifs présents sur le signal de parole reconstitué aux signaux de défauts objectifs et/ou aux signaux de défauts subjectifs de la bibliothèque, permettant, à partir d'une analyse statistique du type de dégradation ou de défaut présent dans le signal de parole reconstitué, de générer des données de qualité vocale (1273, FIG. 3) du signal de parole sauvegardé, durant la communication, dans la mémoire 119. Ces données de qualité vocale sont donc représentatives de la qualité vocale réellement perçue par l'utilisateur du dispositif 10.

Pour obtenir plus de détails concernant le système de détection non intrusive utilisé dans le cadre du mode de réalisation de l'invention décrit ici, on pourra se reporter au document n° 2 817 096, cité plus haut.

Selon une implémentation particulière, les données de qualité vocale générées par le module 123 de traitement du signal, incluent une note de qualité de type "note moyenne d'opinion" (en anglais *mean opinion score* - MOS). Cette note de qualité est calculée en fonction des défauts objectifs et subjectifs détectés dans le signal de parole reconstitué.

Selon un exemple, cette note de qualité comporte une échelle de 1 à 5 dont les valeurs correspondent respectivement aux valeurs de perception : Mauvais, Médiocre, Passable, Bon, Excellent.

Les données de qualité vocale 1273 sont ensuite fournies au module 125 de génération de tickets de qualité. A ce stade du processus, le module de génération de tickets 125 a donc reçu, d'une part, les données d'identification de la communication vocale (1271) et les données de qualité réseau (1272) transmises par le filtre réseau 105, et d'autre part, les données de qualité vocale (1273) transmises par le module 123 de traitement du signal.

Comme illustré à l'étape E43 (FIG. 3), le module 125 selon l'invention, génère alors un rapport informatique de qualité vocale, désigné par "ticket de qualité" 127, rassemblant les données 1271 d'identification de la communication, les données 1272 de qualité réseau, et les données de qualité vocale 1273. Ce ticket de qualité est alors stocké dans la mémoire 129.

Selon l'invention, la mémoire 129 (RAM ou disque dur) est apte à mémoriser une pluralité de tickets de qualité générés au cours de plusieurs communications vocales établies dans le terminal (1) de communication considéré. Selon une implémentation particulière, les tickets de qualité correspondent chacun à une ligne de texte dans un fichier texte.

Conformément à l'invention, le dispositif 10 comprend en outre un module 131 de transmission de tickets de qualité, destiné à transmettre, au travers du réseau 2, les tickets de qualité générés dans le terminal, à destination du serveur de collecte 4. Cette étape du procédé selon l'invention est illustrée à la FIG. 3 par la référence E45.

La transmission des tickets de qualité sur le réseau s'effectue au travers du gestionnaire de protocoles 103 et de l'interface réseau 101. Selon un mode de réalisation préféré, chaque ticket de qualité est incorporé dans un message transmis selon le protocole TCP au travers du réseau IP 2.

Le serveur de collecte 4 est destiné à assurer le traitement des tickets de qualité envoyés par un ensemble (1, 3) de terminaux de communication reliés au réseau, afin d'évaluer la qualité des signaux de parole reçus dans l'ensemble de ces terminaux.

Le serveur de collecte reçoit ainsi de la part de l'ensemble des terminaux de communication équipés d'un dispositif 10 selon l'invention, pour chaque terminal, périodiquement ou après chaque communication vocale, les tickets de qualité générés. A partir des tickets reçus, le serveur de collecte génère, dans un rapport de mesure de qualité, une ligne de texte pour chaque ticket reçu. Ce rapport est stocké en mémoire dans le serveur.

Les informations consignées dans ce rapport de qualité sont ensuite visualisables au travers d'une interface homme-machine (IHM) adaptée, par un opérateur humain. Cette interface homme-machine peut être par exemple une interface graphique affichée sur un écran d'ordinateur.

Ces informations visualisées pourront alors être utilisées pour superviser la qualité de service relative à la voix sur IP, offerte sur le réseau.

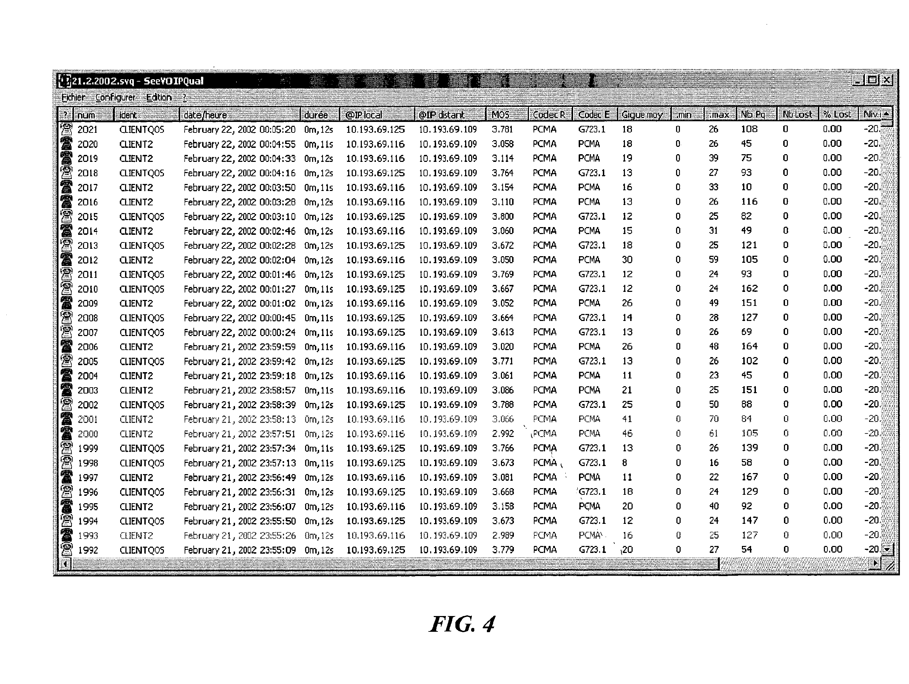

A la FIG. 4, on donne un exemple de fenêtre d'affichage graphique sur écran d'ordinateur, permettant de visualiser ces informations de qualité relatives à un ensemble de terminaux de communication vocale connectés au réseau.

Sur cette fenêtre, chaque ligne commençant par une icône représentant un téléphone, correspond aux données liées à une communication particulière. La couleur sombre de certains téléphones indique que la valeur d'un ou plusieurs des paramètres affichés n'est pas satisfaisante vis-à-vis de seuils prédéfinis.

En résumé, l'invention décrite ici concerne un procédé et un dispositif d'évaluation de la qualité vocale d'un signal de parole reconstitué dans un terminal de communication à partir de paquets de données reçus dans le terminal au cours d'une communication vocale établie au travers d'un réseau à commutation de paquets.

Selon une implémentation préférée, les étapes du procédé sont déterminées par les instructions d'un programme d'évaluation de la qualité vocale selon l'invention, et le procédé est mis en oeuvre lorsque ce programme est chargé dans un ordinateur, ou plus généralement un système informatique, dont le fonctionnement est alors commandé par l'exécution du programme.

En conséquence, l'invention s'applique également à un programme d'ordinateur, particulièrement un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention. Le support d'informations peut être n'importe quelle entité ou dispositif capable de stocker le programme.

Par exemple, le support peut comporter un moyen de stockage, tel qu'une ROM, par exemple un CD ROM ou une ROM semi-conducteur, ou un moyen d'enregistrement magnétique, par exemple une disquette (*floppy disc*) ou un disque dur. D'autre part, le support peut être un support transmissible tel qu'un signal électrique ou optique, qui peut être acheminé via un câble électrique ou optique, ou encore par radio ou par d'autres moyens. En particulier un logiciel selon l'invention peut être téléchargé via l'Internet.

Alternativement, le support d'informations peut être un circuit intégré dans lequel le programme est incorporé, le circuit étant adapté pour exécuter ou pour être utilisé dans l'exécution du procédé en question.

L'invention concerne aussi un équipement terminal de communication vocale équipé d'un dispositif selon l'invention, tel qu'un téléphone IP ou un PC multimédia équipé d'un logiciel de téléphonie. L'invention concerne plus généralement tout équipement de terminaison IP équipé d'un dispositif d'évaluation de la qualité vocale selon l'invention.

Bien entendu, la présente invention n'est nullement limitée aux modes de réalisation décrits et représentés ici, mais englobe, bien au contraire, toute variante à la portée de l'homme du métier. En particulier, l'invention s'applique également à un environnement client-serveur dans lequel tout ou partie des éléments composant un dispositif selon l'invention, sont répartis sur différents équipements connectés à un réseau de transmission de paquets, et communiquant entre eux selon un protocole de type client-serveur.

## Revendications

1. Procédé d'évaluation de la qualité vocale d'un signal de parole reconstitué dans un terminal de communication à partir de paquets de données reçus (E31) dans le terminal au cours d'une communication vocale établie au travers d'un réseau à commutation de paquets, le procédé étant **caractérisé en ce qu'**il comporte les étapes suivantes :
(A) - détection (E33) de l'établissement d'une communication vocale ;
(B) - obtention (E35) d'informations d'identification de la communication vocale à partir des paquets de données reçus, et génération de données d'identification (1271) de la communication, représentatives desdites informations d'identification ;
(C) - obtention (E37) d'informations de qualité réseau à partir des paquets de données reçus, et génération de données (1272) de qualité réseau, représentatives desdites informations de qualité réseau ;
(D) - prélèvement (E39) d'au moins une partie du signal de parole reconstitué, juste avant sa délivrance à une carte son incorporée dans le terminal de communication en vue de sa restitution acoustique ;
(E) - traitement (E41) du signal de parole prélevé, en vue d'obtenir des informations sur la qualité vocale réellement perçue par l'utilisateur du terminal au cours de la communication, et génération de données (1273) de qualité vocale, représentatives desdites informations sur la qualité vocale du signal de parole ;
(F) - génération (E43) et mémorisation d'un rapport informatique de qualité vocale, dit "ticket de qualité", rassemblant lesdites données d'identification de la communication, lesdites données de qualité réseau, et lesdites données de qualité vocale.

2. Procédé selon la revendication 1, **caractérisé en ce qu'**il comporte en outre une étape (G) de transmission dudit ticket de qualité à un serveur de collecte relié au réseau, ledit serveur de collecte assurant le traitement des tickets de qualité envoyés par un ensemble de terminaux de communication reliés au réseau, afin d'évaluer la qualité des signaux de parole reçus dans l'ensemble de terminaux.

3. Procédé selon la revendication 1 ou 2, dans lequel les paquets de données reçus dans le terminal subissent un traitement préalable de désencapsulation protocolaire selon un ensemble prédéfini de protocoles de communication, ledit traitement permettant d'obtenir des messages de signalisation d'appel, des messages de négociation d'appel, un flux de paquets de données audio, et un flux de paquets de données de contrôle de communication, le procédé étant **caractérisé en ce que** :
- l'établissement d'une communication vocale est détecté, à l'étape (A), lors de la réception d'un message de signalisation d'appel prédéterminé caractéristique de l'établissement d'une connexion selon un protocole de signalisation d'appel prédéterminé ;
- les informations d'identification de la communication vocale sont obtenues, à l'étape (B), à partir desdits messages de négociation d'appel ; et
- les informations de qualité réseau sont obtenues, à l'étape (C), à partir desdits paquets de contrôle de communication.

4. Procédé selon la revendication 3, **caractérisé en ce que**, à l'étape (B) :
- lesdites informations d'identification de la communication vocale obtenues à partir des messages de négociation d'appel, incluent les dates de début et de fin de communication, le codec négocié, les identifiants des terminaux appelant et appelé, le chemin reliant les deux terminaux au travers du réseau ; et
- lesdites données d'identification de la communication générées, représentatives des informations d'identification, sont constituées d'un premier document électronique contenant sous forme textuelle les diverses informations d'identification de la communication vocale obtenues.

5. Procédé selon la revendication 3 ou 4, **caractérisé en ce que**, à l'étape (C) :
- lesdites informations de qualité réseau obtenues à partir des paquets de contrôle de communication, incluent des informations statistiques sur la communication, en termes de perte de paquets, de gigue d'interarrivée des paquets, et des informations sur la qualité de service (QoS) du réseau ; et
- les données de qualité réseau générées, sont constituées d'un second document électronique contenant sous forme textuelle les diverses informations de qualité réseau obtenues.

6. Procédé selon l'une quelconque des revendications 3 à 5, **caractérisé en ce que** ledit réseau à commutation de paquets est un réseau à commutation de paquets basé sur le protocole IP, les paquets de données reçus dans le terminal étant des paquets IP.

7. Procédé selon la revendication 6, **caractérisé en ce que** ledit ensemble prédéfini de protocoles de communication, est constitué des protocoles définis selon la recommandation ITU-T H.323.

8. Procédé selon la revendication 6, **caractérisé en ce que** ledit ensemble prédéfini de protocoles de communication, est constitué des protocoles définis selon le standard IETF SIP.

9. Procédé selon la revendication 7, **caractérisé en ce que** :
- les messages de signalisation d'appel sont des messages selon le protocole de signalisation d'appel H.225.0 ;
- les messages de négociation d'appel sont des messages selon le protocole de négociation H.245 ;
- le flux de paquets de données audio est constitué d'un flux de paquets selon le protocole RTP contenant des trames de signal audio numérisé ; et
- le flux de paquets de données de contrôle de communication est constitué d'un flux de paquets selon le protocole RTCP.

10. Procédé selon la revendication 8, **caractérisé en ce que** :
- les messages de signalisation d'appel et les messages de négociation d'appel sont contenus dans des messages selon le protocole SIP ;
- le flux de paquets de données audio est constitué d'un flux de paquets selon le protocole RTP contenant des trames de signal audio numérisé ; et
- le flux de paquets de données de contrôle de communication est constitué d'un flux de paquets selon le protocole RTCP.

11. Procédé selon l'une quelconque des revendications 2 à 10, **caractérisé en ce que** chaque ticket de qualité est envoyé, au cours de l'étape (G), d'un terminal de communication au serveur de collecte au travers d'une communication TCP sur un réseau IP.

12. Procédé selon l'une quelconque des revendications précédentes, **caractérisé en ce que** l'étape (D) de prélèvement d'au moins une partie du signal de parole reconstitué, consiste à prélever, de manière aléatoire pendant la communication, des échantillons de durée prédéterminée du signal de parole.

13. Procédé selon l'une quelconque des revendications précédentes, **caractérisé en ce que** l'étape (E) de traitement du signal de parole prélevé, en vue d'obtenir des informations sur la qualité vocale réellement perçue par l'utilisateur du terminal au cours de la communication, est mise en oeuvre par un module de détection non intrusive des défauts du signal de parole, ledit module de détection comportant des moyens de détection de défauts objectifs et subjectifs présents dans le signal de parole.

14. Dispositif d'évaluation de la qualité vocale d'un signal de parole reconstitué dans un terminal de communication à partir de paquets de données reçus dans le terminal au cours d'une communication vocale établie au travers d'un réseau à commutation de paquets, **caractérisé en ce qu'**il comporte :
- des moyens (105) de filtrage réseau incluant des moyens pour détecter l'établissement d'une communication vocale et générer des données d'identification de la communication, et des moyens pour obtenir des informations de qualité réseau à partir des paquets de données reçus et générer des données de qualité réseau représentatives desdites informations de qualité réseau ;
- des moyens (111) de filtrage audio destinés à prélever au moins une partie du signal de parole reconstitué, juste avant sa délivrance à une carte son incorporée dans le terminal de communication en vue de sa restitution acoustique ;
- des moyens (123) de traitement du signal de parole destinés à obtenir, à partir du signal de parole prélevé par les moyens (111) de filtrage audio, des informations sur la qualité vocale réellement perçue par l'utilisateur du terminal au cours de la communication, et générer des données de qualité vocale représentatives desdites informations sur la qualité vocale du signal de parole ;
- des moyens (125) pour générer des rapports informatiques de qualité vocale, dits "tickets de qualité", chaque ticket de qualité rassemblant lesdites données d'identification de la communication, lesdites données de qualité réseau, et lesdites données de qualité vocale.

15. Dispositif selon la revendication 14, **caractérisé en ce qu'**il comporte en outre :
- des moyens (129) de mémorisation des tickets de qualité générés au cours de communications vocales dans le terminal de communication ;
- des moyens (131) de transmission des tickets de qualité, au travers du réseau, à un serveur de collecte destiné à assurer le traitement des tickets de qualité envoyés par un ensemble de terminaux de communication reliés au réseau, afin d'évaluer la qualité des signaux de parole reçus dans l'ensemble de terminaux.

16. Dispositif selon la revendication 14 ou 15, comportant des moyens adaptés à mettre en oeuvre un procédé d'évaluation de la qualité vocale, selon l'une quelconque des revendications 3 à 13.

17. Equipement terminal de communication vocale, notamment un téléphone IP ou un ordinateur personnel doté d'un logiciel de téléphonie, comportant un dispositif d'évaluation de la qualité vocale d'un signal de parole, selon l'une quelconque des revendications 14 à 16.

18. Programme d'ordinateur sur un support d'informations, ledit programme comportant des instructions de programme adaptées à la mise en oeuvre d'un procédé selon l'une quelconque des revendications 1 à 13, lorsque ledit programme est chargé et exécuté dans un ordinateur.
